# FASCICULE DE BREVET EUROPEEN

(11) **EP 0 499 525 B1**
(45) Date de publication et mention de la délivrance du brevet: **03.05.1995**
(21) Numéro de dépôt: 92400345.2
(22) Date de dépôt: 11.02.1992
(51) Int. Cl.: B60J 1/00

(54) **Procédé d'assemblage d'un vitrage isolant bombé**
Verfahren zum Zusammenbauen einer gekrümmten Isolierglasscheibe
Process for assembling an insulating dished glass pane

(30) Priorité: 11.02.1991 DE 4104106; 11.02.1991 DE 4104107; 11.02.1991 DE 4104108
(43) Date de publication de la demande: 19.08.1992
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Natorff, Mieczyslaw, W-5000 Koln 1 (DE); Schaaf, Franz-Peter, W-5020 Frechen (DE); Happich, Carl-Christoph, W-5100 Aachen (DE)
(74) Mandataire: Menes, Catherine

(56) Documents cités:
- WO-A-90/02696
- DE-A- 3 818 631

## Description

La présente invention concerne un procédé pour la fabrication de vitrages isolants bombés selon lequel deux vitres individuelles bombées sont amenées à distance l'une à l'autre en étant tenues par des moyens d'aspiration et maintenues en position lors de l'intercalation au niveau de leurs bords d'un cadre d'entretoisement. L'invention concerne aussi un dispositif pour l'exécution du procédé.

Les vitrages isolants bombés sont de plus en plus utilisés comme vitrages latéraux de véhicules automobiles. Contrairement aux vitrages isolants plans, il est difficile, dans le cas de vitrages isolants bombés, de respecter des tolérances de surface, de forme et d'épaisseur rigoureuses. Ceci est dû en premier lieu au fait que certains écarts de forme dus au processus de bombage peuvent se produire. Des écarts dans la forme des vitres individuelles peuvent cependant avoir des conséquences directes sur les dimensions du vitrage isolant, en surface et en épaisseur. Les écarts de forme des vitres individuelles peuvent encore s'accroître lorsque les vitres individuelles bombées sont trempées par voie thermique après le bombage, ce qui est nécessaire, par exemple, dans le cas des vitrages d'automobiles pour conférer à ces vitrages le caractère de verre de sécurité. Lorsque deux vitres individuelles bombées sont converties en un vitrage isolant, les écarts de forme se manifestent principalement sous la forme de variations d'épaisseur dans les zones marginales des vitrages isolants. Dans les cas les plus défavorables, les écarts de forme des deux vitres individuelles peuvent s'additionner dans le vitrage isolant.

De tels écarts de forme et d'épaisseur par rapport aux valeurs nominales prédéfinies peuvent être particulièrement marquants dans des vitrages isolants dans lesquels les vitres individuelles ne sont pas bombées par paires, mais séparément. C'est également le cas lorsque les deux vitres individuelles sont, en outre, de grandeurs différentes, comme c'est le cas, par exemple, des vitrages de portières à manivelle, lorsque ceux-ci sont de forme dégradable au niveau de leurs bords. Or c'est précisément dans de tels vitrages automobiles, montés mobiles dans des glissières latérales, que des exigences particulièrement élevées sont imposées aux tolérances de surface et d'épaisseur.

Il est connu du document WO-A-90/02696 un procédé de fabrication de vitrages isolants bombés selon lesquels les deux vitres à associer sont manipulées à l'aide de ventouses, placées à distance l'une de l'autre de manière à permettre l'introduction entre les deux vitres d'une buse pour l'extrusion du cordon périphérique formant le cadre entretoise. Ce procédé ne comporte pas d'étape de rectification de la forme des vitres.

D'autre part, le document DE-A-38 18 631 enseigne un procédé selon lequel la vitre supérieure est dans un premier temps maintenue à l'aide de ventouses tandis que le cordon périphérique est déposé exclusivement sur la vitre inférieure. Dans un second temps des cames viennent se substituer aux ventouses pour retenir la vitre supérieure puis les deux vitres sont pressées contre le cordon. Comme dans le cas précédent, ce procédé ne permet pas la rectification du bombage des deux vitres.

L'invention a pour but de procurer un procédé qui permette de fabriquer des vitrages isolants bombés à tolérances d'épaisseur et de surface relativement rigoureuses.

L'invention a ainsi pour objet un procédé pour la fabrication de vitrages isolants bombés, selon lequel deux vitres individuelles bombées sont amenées à distance l'une de l'autre en étant tenues par des moyens d'aspiration et maintenues en position lors de l'intercalation au niveau de leurs bords d'un cadre d'entretoisement (Procédé du type divulgué par WO-A-90/02696), caractérisé en ce qu'au moins une des vitres individuelles bombées est amenée, par formage élastique dans une forme nominale prédéterminée, du côté correspondant au côté extérieur du vitrage isolant, au moyen d'un plateau d'aspiration, rigide comparativement à la vitre, et est collée, dans cet état, à l'autre vitre individuelle.

L'invention permet tout particulièrement la réalisation de vitrages isolants avec des vitres individuelles trempées par voie thermique, notamment par soufflage d'air froid.

Pour obtenir les tolérances les plus rigoureuses possibles, les deux vitres individuelles sont de manière adéquate corrigées initialement, au plan de leur forme, par les plateaux de formage à aspiration correspondant à la forme nominale et sont collées l'une à l'autre dans cet état de correction de forme, les plateaux de formage à aspiration n'étant détachés des vitres que lorsqu'une jonction suffisamment solide des vitres l'une à l'autre est atteinte.

Etant donné que la rigidité du vitrage isolant est nettement supérieure à celle d'une vitre individuelle, les forces de rappel produites par les déformations élastiques des vitres individuelles sont insuffisantes, après l'assemblage des deux vitres individuelles pour permettre la déformation en retour des vitres individuelles, et ces vitres individuelles sont fixées dans leur forme corrigée dans le vitrage isolant. Au demeurant, dans le cas des écarts de forme, il s'agit essentiellement d'écarts de forme dans les zones des bords des vitres, qui, en règle générale, sont dus à de faibles gauchissements des vitres bombées. De tels gauchissements peuvent cependant, même lorsqu'ils sont très faibles, facilement aboutir à des écarts d'épaisseur relativement importants dans la zone des bords des vitrages isolants. Or, les tolérances d'épaisseur admissibles aux bords des vitrages isolants pour automobiles sont normalement nettement inférieures à 1 mm.

Dans un développement avantageux de l'invention, le cadre d'entretoisement est obtenu à partir d'un cordon fait d'une matière adhésive d'étanchéité, restant plastique, très visqueuse, déposé à la périphérie de la vitre amenée dans sa forme nominale, le cordon étant produit à l'aide d'une buse d'extrusion guidée par un bras de robot. De cette manière, la précision du dépôt du cordon d'adhésif d'étanchéité est accrue. Etant donné que le programme de déplacement du bras de robot est prédéfini, la précision du dépôt du cordon d'adhésif d'étanchéité sur la bord de la vitre est d'autant plus grande que la forme et en particulier les dimensions superficielles de la zone marginale de la vitre correspondent avec une précision accrue aux valeurs nominales.

Dans un développement plus particulièrement avantageux de l'invention, il est prévu de noyer dans le cordon des billes faites d'un matériau déformable sous une pression élevée, notamment sous une pression supérieure à 3 kg. De telles billes, par exemple en aluminium ou en un alliage à base d'aluminium constituent des éléments espaceurs permettant l'obtention d'une lame d'air d'épaisseur nominale lors du pressage des deux vitres individuelles.

Conviennent tout particulièrement bien des billes ayant une résistance à la traction comprise entre 145 et 155N/mm², une dureté Brinnel HB comprise entre environ 42 et 46 et un allongement à la résistance d'environ 10 %. Ces billes sont par exemple disposées tous les 8 à 12 cm, une bille étant systématiquement prévue entre 1 et 2 cm de chaque angle.

D'autres détails, développements et caractères avantageux de l'invention ressortiront de la description suivante d'un exemple de réalisation préféré d'un dispositif convenant pour exécuter le procédé conforme à l'invention, donnée en référence aux dessins annexés qui représentent :
* figure 1 : une vue en perspective d'un plateau de formage à aspiration équipé de dispositifs d'aspiration et de positionnement,
* figure 2 : une vue en coupe schématique d'une presse comportant deux plateaux de formage à aspiration.

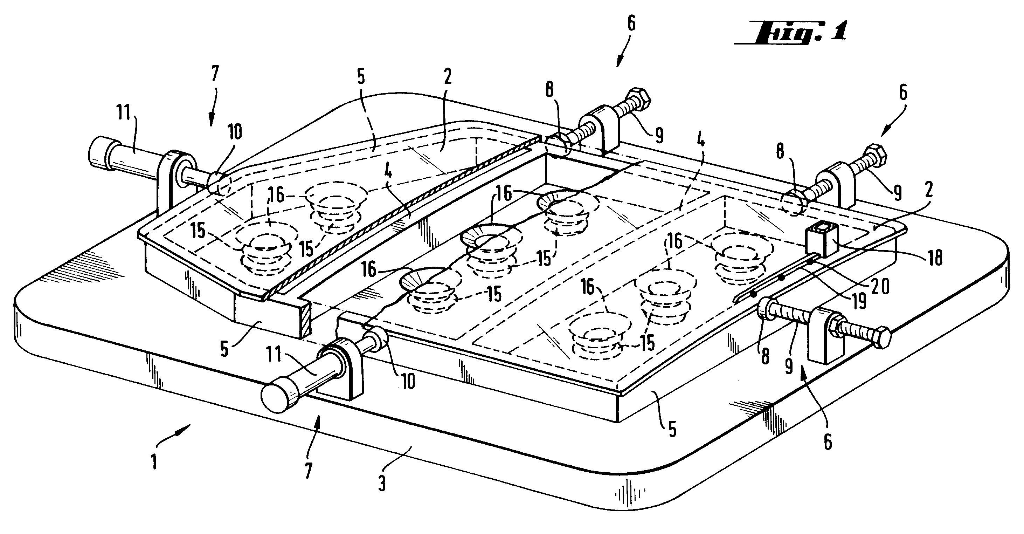

Comme illustré à la figure 1, une vitre 2 bombée et de préférence trempée, en verre float d'environ 3 mm d'épaisseur, est positionnée et amenée dans sa forme nominale au moyen d'un plateau de formage à aspiration 1.

Le plateau de formage à aspiration 1 comprend un plateau de base 3 dimensionnellement stable, sur lequel sont installées des lattes de gabarit 4 et un cadre de gabarit 5 correspondant à la forme périphérique souhaitée de la vitre bombée. Les faces supérieures des lattes de gabarit 4 et du cadre de gabarit 5 correspondent avec précision à la forme nominale respective de la vitre dans ces zones. La position précise de la vitre 2 par rapport au plateau de base est établie au moyen de butées 6, 7 disposées au bord du plateau de base 3. Les butées sont des butées fixes pour lesquelles l'élément de butée proprement dit 8 peut être réglé à l'aide d'une tige filetée 9 dans la position souhaitée. Les butées 7 comportent un élément de butée mobile 10 qui est pressé contre le bord de la vitre au moyen d'un vérin pneumatique 11 et qui repousse la vitre 2 contre les butées fixes 6 opposées. Au repos, les éléments de butée 10 sont rétractés, de sorte que la vitre 2 peut être posée sur les lattes de gabarit 4 ou le vitrage isolant peut être enlevé de celles-ci.

Entre les lattes de gabarit 4 individuelles ou entre les lattes de gabarit 4 et le cadre de gabarit 5 sont installés plusieurs dispositifs d'aspiration rétractables dont la surface de contact supérieure, à l'état non en charge, se trouve au-dessus de la surface de formage nominale de la vitre. A titre de dispositifs d'aspiration rétractables, on peut utiliser des ventouses classiques actionnées par des vérins pneumatiques montés sur la face arrière du plateau de base 3. Dans le cas représenté, des soufflets pliants élastiques 15 servent de dispositifs d'aspiration rétractables. Lorsque la vitre est posée sur le plateau de formage à aspiration, les lèvres d'étanchéité 16 des soufflets pliants 15 s'appliquent de manière étanche contre la surface inférieure de la vitre 2. Dès qu'une dépression est créée dans le système à dépression auquel les soufflets pliants 15 sont raccordés, les soufflets pliants 15 s'appliquent par succion contre la vitre 2, se contractent dans le sens axial et attirent la vitre 2 fermement contre les faces supérieures des lattes de gabarit 4 et du cadre de gabarit 5.

La vitre 2 ainsi positionnée et amenée dans sa forme nominale, un cordon 19 d'une matière adhésive très visqueuse d'étanchéité restant plastique, est appliquée sur le bord de la vitre au moyen d'une buse d'extrusion 18 guidée par un bras de robot, sur le bord de la vitre. La distance entre le cordon et le bord de la vitre est d'environ 0,5 à 1 cm. Ce cordon d'adhésif d'étanchéité sert de moyen d'entretoisement du vitrage isolant et en même temps de cordon adhésif. Il est de préférence constitué d'un caoutchouc butyl mélangé avec un agent absorbant de l'humidité, en particulier avec de la zéolite. Le cordon 19 est appliqué tout le long du pourtour de la vitre et le joint de raccord du cordon extrudé est formé après.

En même temps que le cordon 19, des billes 20 en aluminium ou en un métal comparable sont déposées sur le côté du cordon 19 tourné vers le bord de la vitre et sont légèrement enfoncées dans le cordon 19, de sorte qu'elles adhèrent à ce cordon 19 grâce à son adhésivité. Les billes 20 ont un diamètre sensiblement égal à l'épaisseur nominale de la lame d'air et déterminent ensuite l'écartement des deux vitres individuelles.

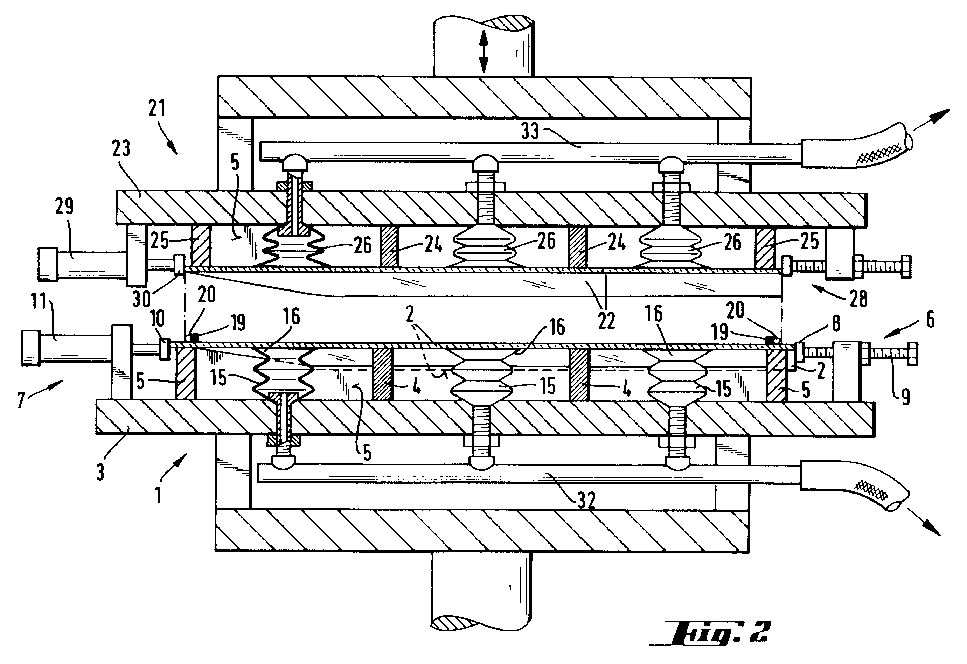

De la même manière que la vitre individuelle 2, l'autre vitre individuelle 22 est également pressée contre un plateau de formage à aspiration 21. Le plateau de formage à aspiration 21 comprend, comme le montre la figure 2, également un plateau de base rigide 23, des lattes de gabarit 24 disposées sur ce plateau de base 23, un cadre de gabarit 25 correspondant à la forme périphérique souhaitée, ainsi que des soufflets pliants élastiques 26 installés entre les lattes de gabarit 24 ou entre les lattes de gabarit 24 et le cadre de gabarit 25. De plus, le plateau de formage à aspiration 21 comprend des butées réglables fixes 28 et des butées 30 opposées à celles-ci et actionnées par des vérins pneumatiques 29.

Une fois les deux vitres individuelles 2 et 22 ainsi positionnées sur les plateaux de formage à aspiration 3, 23 et amenées dans leur forme nominale, et le cordon d'adhésif d'étanchéité 19 appliqué sur la vitre 2, les plateaux de formage à aspiration 3, 23 sont pressés l'un contre l'autre avec les vitres 2. A cet effet, les deux plateaux de formage à aspiration 3, 23 sont avantageusement intégrés dans une presse, comme illustré schématiquement sur la figure 2. A l'intérieur de la presse, les deux plateaux de formage à aspiration 3, 23 sont positionnés l'un par rapport à l'autre, de sorte que le positionnement précis des deux vitres individuelles est garanti l'une par rapport à l'autre. Pendant l'opération de pressage, les tuyauteries 32 et 33, avec lesquelles les soufflets pliants 15, 26 sont en communication, sont maintenues sous dépression et ce, jusqu'à ce que l'opération de pressage soit terminée et que le collage requis par le cordon d'adhésif d'étanchéité 19 soit garanti.

Après que le vitrage isolant ait été retiré de la presse, au terme de l'opération de pressage, la cannelure subsistant au bord, entre le cordon 19 et les zones marginales des vitres individuelles, est garnie par pulvérisation de la manière habituelle d'une matière adhésive durcissante, par exemple un polysulfure comme du Thiokol (marque déposée).

## Revendications

1. Procédé pour la fabrication de vitrages isolants bombés, selon lequel deux vitres individuelles bombées sont amenées à distance l'une de l'autre en étant tenues par des moyens d'aspiration et maintenues en position lors de l'intercalation au niveau de leurs bords d'un cadre d'entretoisement, **caractérisé en ce qu'**au moins une des vitres individuelles bombées (2, 22) est amenée, par formage élastique, dans une forme nominale prédéterminée, du côté correspondant au côte extérieur du vitrage isolant au moyen d'un plateau d'aspiration (1, 21), rigide comparativement à la vitre (2), et est collée, dans cet état, à l'autre vitre individuelle.

2. Procédé selon la revendication 1, **caractérisé en ce que** des vitres individuelles trempées par voie thermique sont utilisées.

3. Procédé selon la revendication 1 ou2, **caractérisé en ce que** les deux vitres sont corrigées initialement au plan de leur forme et sont collées l'une à l'autre dans cet état de correction de forme.

4. Procédé selon l'une des revendications précédentes, **caractérisé en ce que** le cadre d'entretoisement est constitué d'un cordon (9) formé d'une matière adhésive d'étanchéité, restant plastique, très visqueuse, et appliqué à l'aide d'une buse d'extrusion (18) guidée par un bras de robot sur la vitre (2) amenée par formage déformée dans sa forme nominale.

5. Procédé selon l'une des revendications précédentes, **caractérisé en ce que** les billes constituants des éléments définissant l'épaisseur nominale de la lame d'air intercalaire du vitrage isolant sont noyées dans ledit cordon (19).

6. Dispositif pour l'exécution du procédé suivant l'une des revendications précédentes, **caractérisé par** un plateau de base rigide (3, 23), par des lattes de gabarit (4, 5, 24, 25) correspondant à la forme nominale du vitrage isolant, par des butées de positionnement (8, 10, 28, 30) montées sur le plateau de base (3, 23) et par des dispositifs d'aspiration rétractables (15, 26) installés entre les lattes de gabarit (4, 5, 24, 25).

7. Dispositif selon la revendication 6, **caractérisé en ce que** deux plateaux de formage à aspiration (1, 21) sont intégrés dans une presse.

## Claims

1. A process for the manufacture of curved insulating windows whereby two individual curved glass sheets are placed at a distance from one another, being held by means of suction and maintained in position when there is interposed at their edges a bracing frame, **characterized in that** at least one of the individual curved glass sheets (2, 22) is converted, by flexible forming, to a predetermined nominal shape on the face corresponding to the outside of the insulating window, by means of a suction plate (1, 21), comparatively rigid to glass sheet (2), and is glued in such state to the other individual glass sheet.

2. A process according to claim 1, **characterized in that** individual glass sheets tempered by heat treatment are used.

3. A process according to claim 1 or 2, **characterized in that** the two glass sheets are initially corrected for shape and are glued to one another in such state of corrected shape.

4. A process according to any one of the previous claims, **characterized in that** the bracing frame is a bead (19) made of an adhesive sealing material which remains plastic and highly viscous and is applied with the aid of an extrusion nozzle (18) guided by a robot arm on sheet (2) converted by deformed forming to its nominal shape.

5. A process according to any one of the previous claims, **characterized in that** balls constituting the components which define the nominal thickness of the intervening air space of the window are embedded in such bead (19).

6. A device for implementing the process according to any one of the previous claims, **characterized by** a rigid base plate (3, 23), by clearance strips (4, 5, 24, 25) corresponding to the nominal shape of the insulating window, by positioning stops (8, 10, 28, 30) mounted on the base plate (3, 23) and by retractable suction devices (15, 26) fitted between clearance strips (4, 5, 24, 25).

7. A device according to claim 6, **characterized in that** two suction-forming plates (1, 21) are fitted in a press.

## Patentansprüche

1. Verfahren zum Herstellen gebogener Isolierglasscheiben, bei dem zwei gebogene Einzelglasscheiben auf einen gegenseitigen Abstand zusammengeführt und dabei durch Saugmittel erfaßt und während der Zwischenschaltung eines Abstandsrahmens im Randbereich in ihrer Position gehalten werden, **dadurch gekennzeichnet**, daß wenigstens eine der gebogenen Einzelglasscheiben (2,22) auf der der Außenseite der Isolierglasscheibe entsprechenden Seite mit Hilfe einer im Vergleich zur Glasscheibe (2) starren Saugplatte (1,21) unter elastischer Verformung in eine vorbestimmte Sollform gebracht und in diesem Zustand mit der anderen Einzelglasscheibe verklebt wird.

2. Verfahren nach Anspruch 1, dadurch gekennzeichnet, daß thermisch vorgespannte Einzelglasscheiben verwendet werden.

3. Verfahren nach Anspruch 1 oder 2, dadurch gekennzeichnet, daß die beiden Glasscheiben zunächst in ihrer Formfläche korrigiert und dann im Zustand der Formkorrektur miteinander verklebt werden.

4. Verfahren nach einem der voraufgehenden Ansprüche, dadurch gekennzeichnet, daß der Abstandsrahmen aus einem aus einer dauerplastischen, hochviskosen Dichtklebemasse bestehenden Strang (9) gebildet ist, der mit Hilfe einer von einem Roboterarm geführten Extrusionsdüse (18) auf die in ihre Sollform verformte Glasscheibe (2) aufgebracht wird.

5. Verfahren nach einem der voraufgehenden Ansprüche, dadurch gekennzeichnet, daß in den Strang (19) Kugeln eingebettet werden, die die Nenndicke des Luftzwischenraums der Isolierglasscheibe bestimmende Abstandselemente bilden.

6. Vorrichtung zur Durchführung des Verfahrens nach einem der voraufgehenden Ansprüche, gekennzeichnet durch eine starre Grundplatte (3,23), der Sollform der Isolierglassscheibe entsprechende Schablonenleisten (4,5,24,25), auf der Grundplatte (3,23) angeordnete Positionierungsanschläge (8,10,28,30) und zwischen den Schablonenleisten (4,5,24,25) angeordnete zurückziehbare Saugvorrichtungen (15,26).

7. Vorrichtung nach Anspruch 6, dadurch gekennzeichnet, daß zwei Saugformplatten (1,21) in eine Presse integriert sind.
